# EUROPEAN PATENT APPLICATION

(11) **EP 3 753 816 A1**
(43) Date of publication of application: **23.12.2020**
(21) Application number: 20162281.8
(22) Date of filing: 11.03.2020
(51) Int. Cl.: B62D 25/04, B62D 25/06, B62D 27/02

(54) **UPPER VEHICLE-BODY STRUCTURE, VEHICLE AND METHOD OF PROVIDING OR PRODUCING THE SAME**

(30) Priority: 17.06.2019 JP 2019111743
(71) Applicant: Mazda Motor Corporation, Hiroshima 730-8670 (JP)
(72) Inventor: KIYOSHITA, Daisuke, Fuchu-cho, Aki-gun,, Hiroshima 730-8670 (JP); YAMAZAKI, Tadashi, Fuchu-cho, Aki-gun,, Hiroshima 730-8670 (JP); NAKAMURA, Takeshi, Fuchu-cho, Aki-gun,, Hiroshima 730-8670 (JP)
(74) Representative: Müller-Boré & Partner Patentanwälte PartG mbB

(57) **Abstract**

The upper vehicle-body structure includes: a roof side rail disposed at an upper and vehicle-width-direction outer side portion of the vehicle and including a closed cross-section extending in a vehicle front-rear direction; a pillar extending downward from an intermediate portion in the vehicle front-rear direction of the roof side rail; and a roof rail reinforcement disposed inside the intermediate portion in the vehicle front-rear direction of the roof side rail and extending in the front-rear direction, the roof rail reinforcement including front and rear ends bent toward a vehicle-width-direction outer side, the roof rail reinforcement being configured to partition a space inside the intermediate portion of the roof side rail in the vehicle front-rear direction and a vehicle width direction. The roof side rail includes a roof rail outer and a roof rail inner defining, jointly with the roof rail outer, a closed cross-section. The pillar includes a pillar outer and a pillar inner defining, jointly with the pillar outer, a closed cross-section extending in an up-down direction. The roof rail reinforcement is at least fixed to the roof rail outer, the roof rail inner, and the pillar inner.

## Description

### BACKGROUND OF THE INVENTION

### Field of the Invention

The present invention relates to an upper vehicle-body structure for a vehicle including a pair of left and right roof side rails and pillar parts extending substantially downward from intermediate portions in a vehicle front-rear direction of the pair of roof side rails. Further, the invention relates to a vehicle and to a method of providing or producing an upper vehicle-body structure for a vehicle.

### Description of the Related Art

A known conventional upper vehicle-body structure of a vehicle includes: a pair of left and right roof side rails disposed at respective ends of a roof panel in a vehicle width direction and extending substantially in a vehicle front-rear direction; and a pair of left and right center pillars extending substantially downward in an up-down direction from respective intermediate portions in the vehicle front-rear direction of the pair of roof side rails.

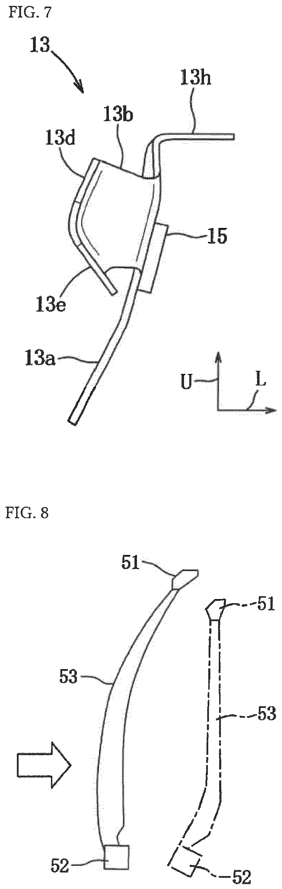

To ensure safety of occupants in the event of a side collision of such a vehicle, various techniques have been proposed to restrain the pillar members from moving toward a vehicle-width-direction inner side. For example, as shown in FIG. 8, a center pillar 53 coupling a roof side rail 51 and a side sill 52 may be structured such that bending rigidity of its upper member corresponding to about two thirds from the upper end of the center pillar 53 is larger than bending rigidity of its lower member corresponding to about one third from the lower end of the center pillar 53. This can make a bending deformation angle of the lower member larger than that of the upper member, allowing to reduce the maximum displacement of the center pillar 53 toward the vehicle-width-direction inner side.

Another known example of the techniques to restrain the pillar members from moving toward the vehicle-width-direction inner side is to dispose members at a connecting portion between the roof side rail and the center pillar in such a manner that the members partition, in a joint-like manner, a substantially closed-cross section inside the roof side rail extending substantially in the front-rear direction to thereby enhance rigidity of the roof side rail against side collisions, as disclosed in JP 2017-039 331 A.

### SUMMARY OF THE INVENTION

A need exists for further improving safety against side collisions than the technique disclosed in JP 2017-039 331 A does. Effective ways to achieve this include disposing a reinforcement member and the like to enhance rigidity of the connecting portion between the roof side rail and the center pillar, but adding the reinforcement member leads to increased weight and manufacturing costs, which is unfavorable. As such, a simple structure that can enhance rigidity of the connecting portion has been desired.

An object of the present invention is to provide an upper vehicle-body structure for a vehicle that can reduce displacement of the roof side rail in the event of a side collision to thereby restrain the pillar from entering into the vehicle interior.

This object is achieved by the features of the independent claims. Further aspects and embodiments are defined in the dependent claims.

An upper vehicle-body structure for a vehicle according to a first aspect of the present invention includes: a roof side rail disposed at an upper and vehicle-width-direction outer side portion of the vehicle, the roof side rail including a substantially closed cross-section extending substantially in a vehicle front-rear direction; a pillar extending substantially downward from an intermediate portion in the vehicle front-rear direction of the roof side rail; and a roof rail reinforcement disposed inside the roof side rail at the intermediate portion in the vehicle front-rear direction of the roof side rail and extending in the vehicle front-rear direction, the roof rail reinforcement including front and rear ends bent toward a vehicle-width-direction outer side, the roof rail reinforcement being configured to partition a space inside the intermediate portion of the roof side rail in the vehicle front-rear direction and/or a vehicle width direction, wherein the roof side rail includes a roof rail outer and a roof rail inner, the roof rail outer constituting a vehicle-width-direction outer side wall, the roof rail inner defining, jointly with the roof rail outer, a substantially closed cross-section, the pillar includes a pillar outer and a pillar inner, the pillar outer constituting a vehicle-width-direction outer side wall, the pillar inner defining, jointly with the pillar outer, a substantially closed cross-section extending substantially in an up-down direction, and the roof rail reinforcement is at least fixed to the roof rail outer, the roof rail inner, and the pillar inner.

The upper vehicle-body structure according to the above aspect includes the roof rail reinforcement disposed inside the roof side rail, which has a substantially closed cross-section extending substantially in the front-rear direction, at the intermediate portion of the roof side rail in the vehicle front-rear direction where the pillar is connected to the roof side rail. The roof rail reinforcement partitions the space inside the roof side rail in a joint-like manner at two points in the front-rear direction and/or partitions the space between the two points in the vehicle width direction. The roof rail reinforcement is at least fixed to the roof rail outer and the roof rail inner constituting the roof side rail and to the pillar inner constituting the pillar. In the event of a side collision, the roof rail reinforcement fixed to both of the roof side rail and the pillar restrains displacement of the pillar relative to the roof side rail and also restrains sectional deformation of the roof side rail to thereby reduce deformation of the roof side rail. This can restrain the pillar from entering into the vehicle interior.

Preferably, a lower end of the roof rail reinforcement is shaped such that a width in the front-rear direction of the lower end narrows downward to conform to a shape of the pillar.

This configuration can reduce weight of the roof rail reinforcement and thus restrain an increase in body weight resulting from enhancing the rigidity of the upper vehicle-body structure.

Further preferred, the pillar outer includes an opening at a portion corresponding to a lower end of the roof rail reinforcement.

This configuration allows spot welding to be done through the opening, enabling easy assembly and reducing weight of the roof rail reinforcement.

Preferably, said pillar is a B-pillar.

Further preferred, said roof rail reinforcement comprises joints respectively formed by bending front and rear ends of a body of the roof rail reinforcement toward the vehicle-width-direction outer side.

Preferably, joint joining portions are provided to the joints for their joining to the roof rail outer.

Further preferred, the roof rail reinforcement is fixed to the roof rail inner with at least one bonding member.

According to a further aspect, there is provided a vehicle comprising an upper vehicle-body structure, as described above.

According to a still further aspect, there is provided a method of providing or producing an upper vehicle-body structure for a vehicle, comprising the steps of:
forming a roof side rail from at least a roof rail outer and a roof rail inner, the roof rail outer constituting a vehicle-width-direction outer side wall, the roof rail inner defining, jointly with the roof rail outer, a substantially closed cross-section,
providing said roof side rail at an upper and vehicle-width-direction outer side portion of the vehicle,
forming a pillar from at least a pillar outer and a pillar inner, the pillar outer constituting a vehicle-width-direction outer side wall, the pillar inner defining, jointly with the pillar outer, a substantially closed cross-section extending substantially in an up-down direction,
providing said pillar extending substantially downward from an intermediate portion in the vehicle front-rear direction of the roof side rail; and
forming a roof rail reinforcement such that front and rear ends thereof are bent toward a vehicle-width-direction outer side,
mounting the roof rail reinforcement inside the roof side rail at the intermediate portion in the vehicle front-rear direction of the roof side rail such that the roof rail reinforcement partitions a space inside the intermediate portion of the roof side rail in the vehicle front-rear direction and/or a vehicle width direction, and
fixing the roof rail reinforcement at least to the roof rail outer, the roof rail inner, and the pillar inner.

Preferably, a lower end of the roof rail reinforcement is shaped such that a width in the front-rear direction of the lower end narrows downward to conform to a shape of the pillar.

Further preferred, the pillar outer is formed with an opening at a portion corresponding to a lower end of the roof rail reinforcement.

Preferably, said pillar is a B-pillar.

Further preferred, said roof rail reinforcement is provided with joints respectively formed by bending front and rear ends of a body of the roof rail reinforcement toward the vehicle-width-direction outer side.

Preferably, joint joining portions are provided to the joints for their joining to the roof rail outer.

Further preferred, the roof rail reinforcement is fixed to the roof rail inner with at least one bonding member.

The upper vehicle-body structure of a vehicle according to the above aspects of the present invention can reduce deformation of the roof side rail in the event of a side collision and thereby restrain the pillar from moving toward the vehicle interior.

### BRIEF DESCRIPTION OF THE DRAWINGS

FIG. 1 is a perspective view of a vehicle-width-direction outer side of a vehicle of an embodiment;
FIG. 2 is a perspective view of major parts of a roof side rail;
FIG. 3 is a perspective view of major parts inside the roof side rail as viewed from a vehicle interior side;
FIG. 4 is a sectional view taken along the line IV-IV of FIG. 2;
FIG. 5 is a sectional view taken along the line V-V of FIG. 2;
FIG. 6 is a side view of a roof rail reinforcement as viewed from the vehicle interior side;
FIG. 7 is a front view of the roof rail reinforcement as viewed from the front of the vehicle; and
FIG. 8 explains displacement of a center pillar in the event of a side collision of the vehicle.

### DETAILED DESCRIPTION OF THE PREFERRED EMBODIMENT

A preferred embodiment of the present invention will be described below with reference to the drawings. The preferred embodiment given below is merely exemplary in nature and is not intended to limit the present invention, its application, or uses.

### Embodiment

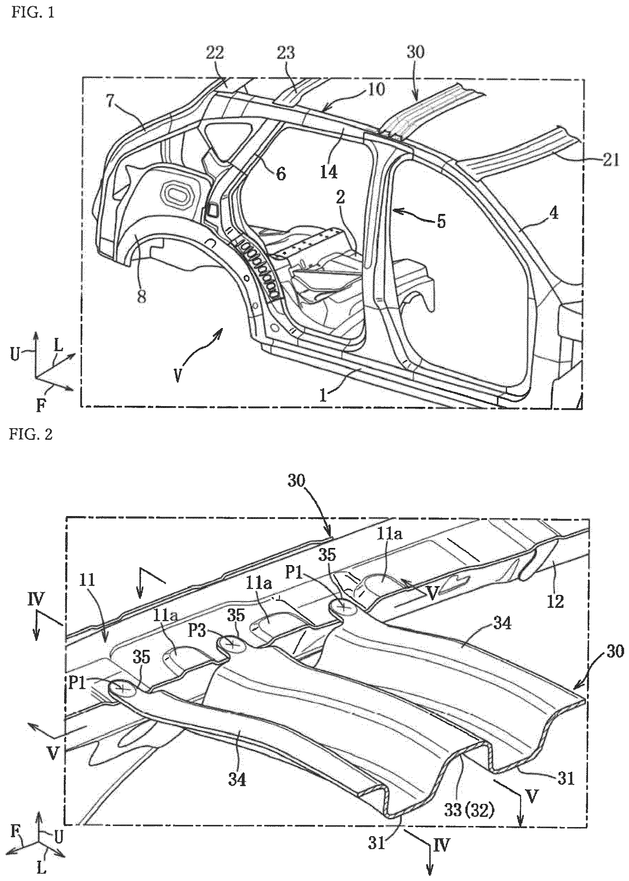

As shown in FIG. 1, a vehicle V includes an engine (not shown in the figure) vertically installed in an engine compartment at the front of its vehicle interior. In the following description, an arrow F direction, an arrow L direction, and an arrow U direction in the figures represent a frontward direction in the vehicle front-rear direction, a leftward direction in the vehicle width direction, and an upward direction in the vehicle up-down direction, respectively. The vehicle V has a symmetric structure; accordingly, the following description mainly refers to components and portions on the right side of the vehicle V unless specifically noted.

First, a description will be given of an overall configuration.

As shown in FIG. 1, the vehicle V includes preferably: a pair of left and right side sills 1 disposed at vehicle-width-direction outer side portions and extending substantially in the front-rear direction; a floor panel 2 laid between the pair of side sills 1 and constituting a vehicle interior floor; a pair of left and right roof side rails 10 extending substantially in the front-rear direction and supporting a roof panel (not shown in the figure); and a pair of left and right A pillars 4, a pair of left and right B pillars 5 (pillar), a pair of left and right C pillars 6, and preferably a pair of left and right D pillars 7 each extending substantially downward from the pair of roof side rails 10 to the pair of side sills 1 and/or a lower vehicle body portion.

The side sill 1 is preferably composed of an outer member and an inner member formed by pressing a steel plate. These outer and inner members jointly define a substantially linear substantially closed cross-section extending substantially in the front-rear direction. A lower end of a hinge pillar, which corresponds to a lower half of the A pillar 4, is connected to a front end portion of the side sill 1, and a lower end of the B pillar 5 is connected to an intermediate portion of the side sill 1. The A pillar 4, a front portion of the roof side rail 10, the B pillar 5, and a front portion of the side sill 1 define a door opening edge of a front door (not shown).

A front end portion of a rear wheel well 8 is connected to a rear end portion of the side sill 1. The B pillar 5, a rear portion of the roof side rail 10, the C pillar 6, a front portion of the rear wheel well 8, and a rear portion of the side sill 1 define a door opening edge of a rear door (not shown). The B pillar 5 is preferably structured such that bending rigidity of its upper member corresponding to about two thirds from the upper end of the B pillar 5 is larger than bending rigidity of its lower member corresponding to about one third from the lower end of the B pillar 5.

The pair of roof side rails 10 are disposed at the vehicle-width-direction outer side portions so as to respectively correspond to left and right ends of the roof panel. The pair of roof side rails 10 include preferably a pair of front and rear headers 21, 22, and two roof reinforcements 23, 30. The front header 21 connects front ends of the pair of roof side rails 10, and the rear header 22 connects rear ends of the pair of roof side rails 10. The rear header 22 is preferably mounted with a pair of left and right hinges (not shown) for opening and closing a lift gate (not shown). The roof reinforcement 23 is positioned so as to connect upper end portions of the pair of C pillars 6 in the left-right direction. The roof reinforcement 30 is positioned so as to connect upper end portions of the pair of B pillars 5 in the left-right direction.

As shown in FIG. 2, a left end (vehicle-width-direction inner side end) of a roof rail outer 11 is preferably formed in a concave-convex shape (curved wave shape) in side view. The roof rail outer 11 is preferably formed at its end with multiple bulges 11a arranged in the front-rear direction. The bulges 11a bulge substantially upward relative to a reference surface that occupies most of the upper wall of the roof rail outer 11. These bulges 11a are preferably joined by welding to a bottom face of the roof panel. The roof reinforcement 30 is joined to the left end of the roof rail outer 11.

Now a description will be given of the roof reinforcement 30.

As shown in FIGS. 2 to 5, the roof reinforcement 30 is, for example, integrally formed of a high tensile steel plate and preferably includes: a pair of substantially U-sectioned, front and rear lower grooves 31; a connecting portion 33 connecting a rear upper end of the front lower groove 31 and a front upper end of the rear lower groove 31 to define an inverted U-sectioned upper groove 32; and a pair of front and rear flanges 34 respectively extending substantially frontward from a front upper end of the front lower groove 31 and extending substantially rearward from a rear upper end of the rear lower groove 31.

A right end of the roof reinforcement 30, namely right ends of the connecting portion 33 and the pair of front and rear flanges 34 are preferably disposed so as to face the left end of the roof rail outer 11 with a slight gap in between. The connecting portion 33 and the pair of front and rear flanges 34 are preferably formed with protrusions 35 extended substantially rightward from their respective ends. Each protrusion 35 is present between two adjacent bulges 11a and joined by welding to the upper surface (reference surface) of the roof rail outer 11. A gusset 40 is preferably disposed providing reinforcement between the roof side rail 10 and the roof reinforcement 30 from the vehicle interior side. In response to a load being input to the roof side rail 10 via the B pillar 5 in the event of a side collision, the roof reinforcement 30 restrains the roof side rail 10 from being displaced toward the vehicle-width-direction inner side.

Now a description will be given of the roof side rail 10.

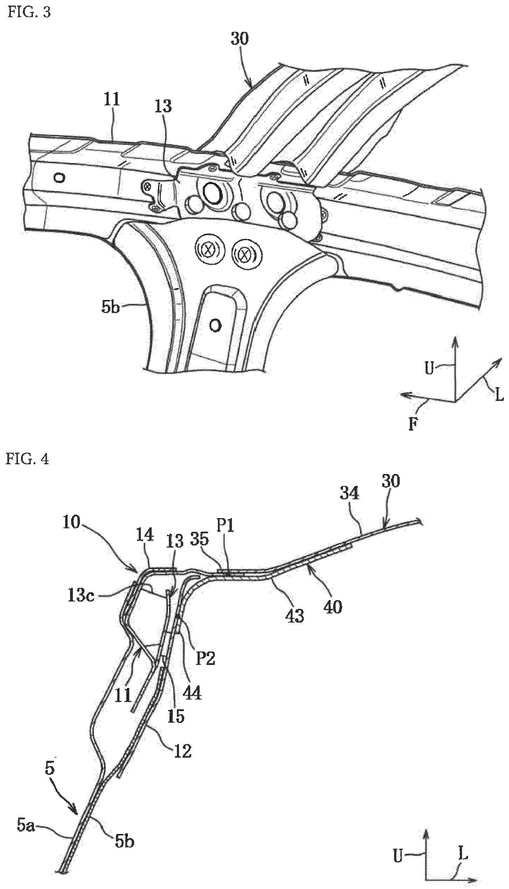

The roof side rail 10 preferably includes: the roof rail outer 11 constituting a right wall (vehicle-width-direction outer side wall); a roof rail inner 12 defining, jointly with the roof rail outer 11, a substantially trapezoidal substantiall closed cross-section extending substantially in the front-rear direction; and a substantially L-sectioned reinforcement member 14 covering an upper ridge of the roof rail outer 11 extending substantially in the front-rear direction. As shown in FIGS. 3 to 5, a roof rail reinforcement 13 is preferably disposed at an intermediate portion in the vehicle front-rear direction of the roof side rail 10 to which the upper end of the B pillar 5 is connected. The roof rail reinforcement 13 partitions the trapezoidal closed cross-section into inside and outside portions in the vehicle width direction.

An upper end of an outer member 5a (pillar outer) of the B pillar 5 is joined to a right side of the roof rail outer 11 on which the reinforcement member 14 is disposed. An upper end portion of an inner member 5b (pillar inner) of the B pillar 5 is joined and fixed to a lower end portion of the roof rail outer 11 with a lower end of the roof rail reinforcement 13 interposed in between. The outer member 5a is preferably formed with an opening 5c at a position corresponding to this joining portion. The roof rail outer 11, the roof rail reinforcement 13, and the inner member 5b are joined through the opening 5c, and forming the opening 5c also reduces weight.

The upper end of the inner member 5b is also joined to a lower end of the roof rail inner 12, and an upper end of the roof rail inner 12 bent toward the vehicle-width-direction inner side is joined to the upper face of the roof rail outer 11. On the vehicle-width-direction outer side relative to this joining portion of the roof rail inner 12 and the roof rail outer 11, an upper end of the roof rail reinforcement 13 bent toward the vehicle-width-direction inner side is joined and fixed to the upper face of the roof rail outer 11. That is, at the intermediate portion in the vehicle front-rear direction of the roof side rail 10, the roof rail outer 11 and the roof rail reinforcement 13 jointly define a substantially closed cross-section extending substantially in the front-rear direction, and the roof rail outer 11, the roof rail reinforcement 13, the inner member 5b, and the roof rail inner 12 jointly define a substantially closed cross-section substantially extending in the front-rear direction. The roof rail reinforcement 13 is preferably fixed to the roof rail inner 12 with a bonding member 15.

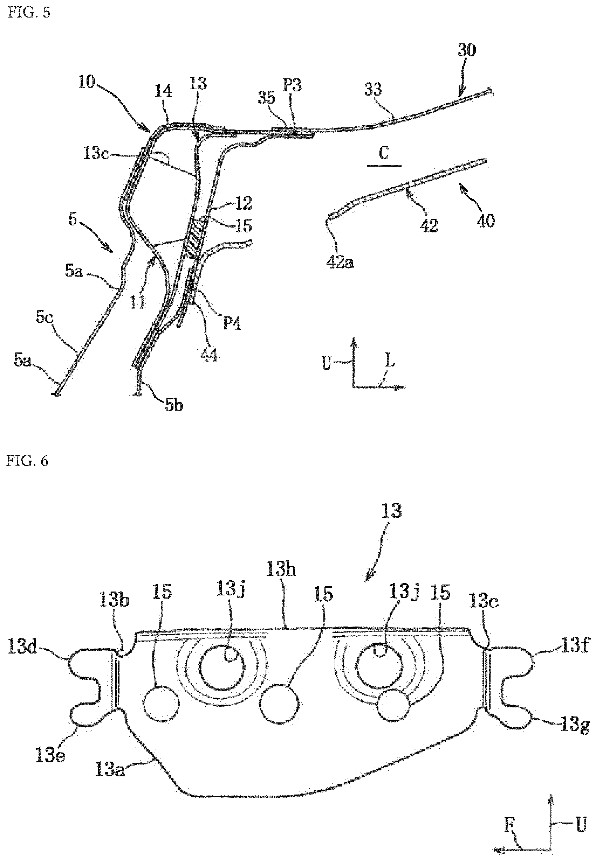

As shown in FIGS. 4 and 5, the roof side rail 10, the roof reinforcement 30, and the gusset 40 are joined to each other preferably at the first to the fourth joining portions P1 to P4. The first and the second joining portions P1 and P2 are at positions corresponding to front and rear ends of the gusset 40. At the first joining portion P1, the roof rail outer 11 is interposed between the protrusion 35 (the flange 34) and an upper flange 43, and they are triple-joined to each other preferably by welding. At the second joining portion P2, which is on the vehicle-width-direction outer side relative to the first joining portion P1, the roof rail inner 12 and a side flange 44 are joined to each other preferably by welding.

The third and the fourth joining portions P3 and P4 are at positions corresponding to intermediate portions of the gusset 40 in the front-rear direction. The roof rail inner 12 is partially extended leftward. Thus, at the third joining portion P3, the roof rail outer 11 is interposed between the protrusion 35 (the connecting portion 33) and the roof rail inner 12, and they are triple-joined to each other preferably by welding. At the fourth joining portion P4, which is on the vehicle-width-direction outer side relative to the third joining portion P3, the roof rail inner 12 is interposed between the side flange 44 and the inner member 5b, and they are triple-joined to each other preferably by welding.

In the present embodiment, the same joining method is preferably used to join the members at the first, second and fourth joining portions P1, P2, and P4. Further, the joining method to join the roof rail outer 11, the roof rail inner 12, and the roof reinforcement 30 at the third joining portion P3 is preferably the same as the joining method to join the members at the first, second and fourth joining portions P1, P2, and P4. This allows the welding to be done using the same welding station, helping to improve production efficiency.

Below a description will be given of the roof rail reinforcement 13.

As shown in FIGS. 6 and 7, the roof rail reinforcement 13 is formed by pressing a steel plate and preferably includes: a plate-like body 13a; joints 13b, 13c respectively formed by bending front and rear ends of the body 13a toward the vehicle-width-direction outer side; joint joining portions 13d to 13g provided to the joints 13b, 13c for their joining to the roof rail outer 11; and an upper end joining portion 13h formed by bending an upper end of the body 13a toward the vehicle-width-direction inner side.

A lower portion of the body 13a reduces its width in the front-rear direction toward the lower end. This reduces weight and also allows the body 13a to fit within the B pillar 5. An opening 13j formed in an upper portion of the body 13a enables spot welding of the outer member 5a of the B pillar 5 and the roof rail outer 11 through the opening 13j and also contributes to reduced weight. The bonding members 15 for fixing the roof rail reinforcement 13 to the roof rail inner 12 are preferably attached respectively to middle front and middle rear portions and an intermediate portion of the body 13a.

The roof rail reinforcement 13 partitions the trapezoidal substantially closed cross-section of the roof side rail 10 into inner and outer sides in the vehicle width direction, and the substantially closed cross-section on the vehicle-width-direction outer side is also partitioned on front and rear sides by the joints 13b, 13c of the roof rail reinforcement 13. These joints 13b, 13c function to prevent collapse of the substantially closed cross-section of the roof side rail 10 on the vehicle-width-direction outer side and increase its rigidity, restraining deformation of the roof side rail 10 in the event of a side collision to thereby reduce entry of the B pillar 5 into the vehicle interior. Additionally, the roof rail reinforcement 13 is fixed to the roof rail inner 12, which allows the roof rail reinforcement 13 to also prevent collapse of the substantially closed cross-section of the roof side rail 10 on the vehicle-width-direction inner side. This allows to further restrain deformation of the roof side rail 10 in the event of a side collision.

The joints 13b, 13c of the roof rail reinforcement 13 produce difference in rigidity against sectional collapse between portions of the substantially closed cross-section partitioned into inner and outer sides in the vehicle width direction, and in response to vibrations transmitted from the B pillar 5, the roof rail inner 12 vibrates relatively more than the roof rail reinforcement 13. These vibrations are damped by the bonding members 15 absorbing and converting them into heat, whereby vibrations transmitted to the roof reinforcement 30 and other components are reduced. In other words, the bonding members 15 function to damp vibrations transmitted to the roof side rail 10 via the B pillar 5.

Functions and effects of the above upper vehicle-body structure will be described below.

The upper vehicle-body structure includes the roof rail reinforcement 13 disposed inside the roof side rail 10, which has a substantially closed cross-section extending in the front-rear direction, at the intermediate portion of the roof side rail 10 in the vehicle front-rear direction where the B pillar 5 is connected to the roof side rail 10. The roof rail reinforcement 13 partitions the space inside the roof side rail 10 into inner and outer portions in the vehicle width direction and also partitions the outer space in a joint-like manner at two points in the front-rear direction. The roof rail reinforcement 13 is at least fixed to the roof rail outer 11 and the roof rail inner 12 constituting the roof side rail 10 and to the inner member 5b constituting the B pillar 5. Thus, in the event of a side collision, the roof rail reinforcement 13 fixed to both of the roof side rail 10 and the B pillar 5 restrains displacement of the B pillar 5 relative to the roof side rail 10 and also restrains sectional deformation of the roof side rail 10 to thereby reduce deformation of the roof side rail 10. This can restrain the B pillar 5 from moving (entering) into the vehicle interior.

The lower portion of the roof rail reinforcement 13 is preferably shaped such that its width in the front-rear direction narrows downward to conform to the shape of the B pillar 5. This can reduce weight of the roof rail reinforcement 13 and thus restrain an increase in body weight resulting from enhancing the rigidity of the upper vehicle-body structure.

The outer member 5a includes the opening 5c at the portion corresponding to the lower end of the roof rail reinforcement 13. This allows for joining through the opening 5c, enabling an easy assembly and reduced the weight of the vehicle body.

Besides the above, those skilled in the art will readily understand that various modifications to the above embodiment are possible while keeping with the essential teaching of the present invention. The present invention encompasses these modifications and alterations.

## Claims

1. An upper vehicle-body structure for a vehicle, the upper vehicle-body structure comprising:
a roof side rail (10) disposed at an upper and vehicle-width-direction outer side portion of the vehicle, the roof side rail (10) including a substantially closed cross-section extending substantially in a vehicle front-rear direction;
a pillar (5) extending substantially downward from an intermediate portion in the vehicle front-rear direction of the roof side rail (10); and
a roof rail reinforcement (13) disposed inside the roof side rail (10) at the intermediate portion in the vehicle front-rear direction of the roof side rail (10) and extending substantially in the vehicle front-rear direction, the roof rail reinforcement (13) including front and rear ends bent toward a vehicle-width-direction outer side, the roof rail reinforcement (13) being configured to partition a space inside the intermediate portion of the roof side rail (10) in the vehicle front-rear direction and/or a vehicle width direction, wherein
the roof side rail (10) includes a roof rail outer (11) and a roof rail inner (12), the roof rail outer (11) constituting a vehicle-width-direction outer side wall, the roof rail inner (12) defining, jointly with the roof rail outer (11), a substantially closed cross-section,
the pillar (5) includes a pillar outer (5a) and a pillar inner (5b), the pillar outer (5a) constituting a vehicle-width-direction outer side wall, the pillar inner (5b) defining, jointly with the pillar outer (5a), a substantially closed cross-section extending substantially in an up-down direction, and
the roof rail reinforcement (13) is at least fixed to the roof rail outer (11), the roof rail inner (12), and the pillar inner (5b).

2. The upper vehicle-body structure according to claim 1, wherein a lower end of the roof rail reinforcement (13) is shaped such that a width in the front-rear direction of the lower end narrows downward to conform to a shape of the pillar (5).

3. The upper vehicle-body structure according to claim 1 or 2, wherein the pillar outer (5a) includes an opening (5c) at a portion corresponding to a lower end of the roof rail reinforcement (13).

4. The upper vehicle-body structure according to any one of the preceding claims, wherein said pillar (5) is a B-pillar.

5. The upper vehicle-body structure according to any one of the preceding claims, wherein said roof rail reinforcement (13) comprises joints (13b, 13c) respectively formed by bending front and rear ends of a body (13a) of the roof rail reinforcement (13) toward the vehicle-width-direction outer side.

6. The upper vehicle-body structure according to claim 5, wherein joint joining portions (13d to 13g) are provided to the joints (13b, 13c) for their joining to the roof rail outer (11).

7. The upper vehicle-body structure according to any one of the preceding claims, wherein the roof rail reinforcement (13) is fixed to the roof rail inner (12) with at least one bonding member (15).

8. A vehicle comprising an upper vehicle-body structure according to any one of the preceding claims.

9. A method of providing or producing an upper vehicle-body structure for a vehicle, comprising the steps of:
forming a roof side rail (10) from at least a roof rail outer (11) and a roof rail inner (12), the roof rail outer (11) constituting a vehicle-width-direction outer side wall, the roof rail inner (12) defining, jointly with the roof rail outer (11), a substantially closed cross-section,
providing said roof side rail (10) at an upper and vehicle-width-direction outer side portion of the vehicle,
forming a pillar (5) from at least a pillar outer (5a) and a pillar inner (5b), the pillar outer (5a) constituting a vehicle-width-direction outer side wall, the pillar inner (5b) defining, jointly with the pillar outer (5a), a substantially closed cross-section extending substantially in an up-down direction,
providing said pillar (5) extending substantially downward from an intermediate portion in the vehicle front-rear direction of the roof side rail (10); and
forming a roof rail reinforcement (13) such that front and rear ends thereof are bent toward a vehicle-width-direction outer side,
mounting the roof rail reinforcement (13) inside the roof side rail (10) at the intermediate portion in the vehicle front-rear direction of the roof side rail (10) such that the roof rail reinforcement (13) partitions a space inside the intermediate portion of the roof side rail (10) in the vehicle front-rear direction and/or a vehicle width direction, and
fixing the roof rail reinforcement (13) at least to the roof rail outer (11), the roof rail inner (12), and the pillar inner (5b).

10. The method according to claim 9, wherein a lower end of the roof rail reinforcement (13) is shaped such that a width in the front-rear direction of the lower end narrows downward to conform to a shape of the pillar (5).

11. The method according to claim 9 or 10, wherein the pillar outer (5a) is formed with an opening (5c) at a portion corresponding to a lower end of the roof rail reinforcement (13).

12. The method according to any one of the preceding claims 9 to 11, wherein said pillar (5) is a B-pillar.

13. The method according to any one of the preceding claims 9 to 12, wherein said roof rail reinforcement (13) is provided with joints (13b, 13c) respectively formed by bending front and rear ends of a body (13a) of the roof rail reinforcement (13) toward the vehicle-width-direction outer side.

14. The method according to claim 13, wherein joint joining portions (13d to 13g) are provided to the joints (13b, 13c) for their joining to the roof rail outer (11).

15. The method according to any one of the preceding claims 9 to 14, wherein the roof rail reinforcement (13) is fixed to the roof rail inner (12) with at least one bonding member (15).
